# EUROPÄISCHE PATENTSCHRIFT

(11) **EP 4 476 043 B1**
(45) Veröffentlichungstag und Bekanntmachung des Hinweises auf die Patenterteilung: **15.10.2025**
(21) Anmeldenummer: 23705472.1
(22) Anmeldetag: 02.02.2023
(51) Int. Cl.: B29C 48/691, B29C 48/693, B29C 48/40, B29C 48/68

(54) **FILTRIERVORRICHTUNG FÜR PVC-KUNSTSTOFFSCHMELZE ZUR VERBINDUNG MIT EINEM DOPPELSCHNECKENEXTRUDER UND DOPPELSCHNECKENEXTRUDER FÜR DIE PVC-VERARBEITUNG**
FILTER DEVICE FOR PVC PLASTIC MELT FOR CONNECTION TO A TWIN SCREW EXTRUDER AND TWIN SCREW EXTRUDER FOR PVC PROCESSING
DISPOSITIF DE FILTRATION POUR DE LA MASSE FONDUE DE MATIÈRE PLASTIQUE À BASE DE PVC DESTINÉ À ÊTRE RACCORDÉ À UNE EXTRUDEUSE À DEUX VIS ET EXTRUDEUSE À DEUX VIS POUR LA TRANSFORMATION DE PVC

(30) Priorität: 07.02.2022 DE 102022102820
(43) Veröffentlichungstag der Anmeldung: 18.12.2024
(73) Patentinhaber: Gneuss GmbH, 32549 Bad Oeynhausen (DE)
(72) Erfinder: GNEUSS, Stephan, 32547 Bad Oeynhausen (DE); GNEUSS, Daniel, Charlotte (US); GNEUSS, Detlef, 6919 Carabietta (CH)
(74) Vertreter: Tarvenkorn, Oliver
(86) Internationale Anmeldenummer: PCT/DE2023/100086
(87) Internationale Veröffentlichungsnummer: WO 2023/147822

(56) Entgegenhaltungen:
- EP-B1- 3 160 711
- CN-U- 203 680 783
- DE-C1- 4 018 310
- US-A1- 2008 179 261

## Beschreibung

Die Erfindung betrifft eine Filtriervorrichtung für PVC-Kunststoffschmelze mit den Merkmalen des Oberbegriffs des Anspruchs 1 und einen Doppelschneckenextruder für die PVC-Verarbeitung mit den Merkmalen des Oberbegriffs des Anspruchs 8.

Die Verarbeitung von PVC-Kunststoffschmelze ist anspruchsvoll, da diese bei zu langer Wärmeeinwirkung chemisch degradiert. Dabei kann, insbesondere bei Temperaturen von mehr als 180°C, auch Salzsäure freigesetzt werden, die korrosiv auf die Verarbeitungsanlagen wirkt. Daher müssen die Fließwege zwischen der Aufschmelzung im Extruder und dem Ausstoß an einer Werkzeugdüse grundsätzlich kurzgehalten werden.

Beim Recycling von PVC muss zwischen Extruder und Werkzeug oftmals eine Filtriervorrichtung eingefügt werden, um Konglomerate und Fremdkörper vor Erreichen der Düse bzw. des sonstigen Werkzeugs aus der Kunststoffschmelze zu filtern. Durch den eingefügten Filter verlängern sich die Fließwege, und es besteht die Gefahr, dass nicht ausreichend durchströmte Bereiche entstehen, in denen Kunststoffschmelze zu lange verweilt.

DE 42 35 523 C1 beschreibt eine Siebvorrichtung mit einer drehbaren Siebscheibe. Durchbrechungen im Gehäuse und Siebeinsätze in der Siebscheibe besitzen eine kreisförmige Grundfläche. Dabei erweitert sich der Schmelzekanal in einem Mündungsbereich und gabelt sich vor der Siebscheibe auf, so dass er mit zwei Teilmündungen im Teilungsabstand der Durchbrechungen auf der Siebscheibe mündet. Auf der Rückseite vereinigen sich die Teilströmungen wieder. Dieses Konzept dient jedoch der Durchsatzerhöhung und ist nicht für die Filtrierung von PVC-Kunststoffschmelze, die von einem Doppelschneckenextruder bereitgestellt wird.

Ein ähnliches Konzept einer Filtriervorrichtung, bei der sich der Schmelzekanal in Fließrichtung vor der Siebscheibe in zwei Teilkanäle aufteilt, die sich hinter der Siebstelle wieder vereinen, ist in US 2008/179261 A1 offenbart. Auch hierbei ist eine Eignung der Filtriervorrichtung im Zusammenhang mit einem Doppelschneckenextruder weder vorgesehen noch objektiv gegeben.

In DE 40 18 310 C1 ist ein Verfahren zum Filtern von Kunststoffschmelzen mittels einer Siebradfiltriervorrichtung angegeben. Um chemische Veränderungen der Kunststoffschmelze in schlecht durchströmten Bereichen des durch die Filtriervorrichtung führenden Schmelzekanals zu vermeiden, ist vorgesehen, dass die in Siebkammern verbliebene Kunststoffschmelze vor Erreichen der Reinigungs- bzw. Filterwechselstellung mittels Druckgases herausgedrückt und dem abgangsseitigen Ende des Schmelzekanals zugeführt wird. Die Aufgabe der Erfindung besteht somit darin, eine Filtriervorrichtung für PVC-Kunststoffschmelze anzugeben, die mit einem Doppelschneckenextruder zu verbinden ist, bei der das Fließverhalten verbessert ist und demzufolge die Gefahr einer chemischen Veränderung der Schmelze reduziert ist.

Die Druckschriften EP 3 160 711 B1 und CN 203 680 783 U beschreiben weitere Filtriervorrichtungen für PVC-Kunststoffschmelze.

Diese Aufgabe wird durch eine Filtriervorrichtung mit den Merkmalen des Anspruchs 1 gelöst.

Die Erfindung beruht auf dem an sich bekannten Konzept eines Siebradfilters und dem weiteren Ansatz, Teile der Einlaufseite einer solchen

Filtriervorrichtung direkt als Teil des Spitzenbereichs eines Doppelschneckenextruders auszubilden, so dass die Extruderschnecken mit ihren Spitzen bis in die Filtriervorrichtung eingeführt werden können.

Dafür ist im Einlaufblock eine Einlauf-Schmelzetasche ausgebildet, die an einer Einlaufseite an der Außenseite des Gehäuses eine Doppel-Extruderschneckenaufnahme für zwei Schneckenspitzen von zwei nebeneinander anzuordnenden Extruderschnecken aufweist und die in einem ovalen oder langlochförmigen Sammelbereich vor dem Siebrad mündet. Durch die Teilintegration des Extruders in die Filtriervorrichtung kann auf die üblicherweise vorhandenen Rohrflanschverbindungen, mit denen üblicherweise eine Fließverbindung zwischen einem in sich abgeschlossenen Extruder und einer ebenfalls in sich abgeschlossenen Filtriervorrichtung hergestellt wird, verzichtet werden. Die Fließwege innerhalb der Filtriervorrichtung sind bei der Erfindung folglich besonders kurz, da die Spitzen der Extruderschnecken bis sehr nah an das Siebrad mit den darin eingesetzten Siebelementen heranreichen können.

Vorteilhaft bei der Erfindung ist weiterhin die gleichzeitige Aufweitung des Schmelzekanalquerschnitts in der Einlaufschmelzetasche, und zwar zugleich in x- und y-Richtung. Die Aufweitung erfolgt relativ zum Einlaufkanalquerschnitt, dessen Abmaße durch die Geometrie der Doppelschnecke bedingt sind, und hier insbesondere mit einer im Verhältnis annähernd gleichmäßigen Aufweitung horizontal und vertikal, also in x- und in y-Richtung. Daraus ergibt sich gegenüber der bekannten Überführung des Querschnitts einer Doppelschnecke in einen zylindrischen Fließkanal der Vorteil, dass die Strömung sehr viel gleichmäßiger ist und dass die Siebelemente auf der Siebscheibe durch die geringere Höhe des Ovals oder des Langlochs eine gegenüber einem Kreisquerschnitt geringere radiale Ausdehnung haben können. Die radiale Ausdehnung bestimmt den Siebraddurchmesser und damit die Baugröße der Filtriervorrichtung insgesamt, sodass umgekehrt durch eine Reduzierung der radialen Ausdehnung die Baugröße reduzierbar ist.

Bevorzugt ist die Doppel-Extruderschneckenaufnahme an der Einlauf-Schmelzetasche durch zwei sich seitlich schneidende, parallel zueinander ausgerichtete Zylinderbohrungen gebildet, wobei der Querschnitt die Form einer liegenden Acht besitzt. Damit werden die Endabschnitte der Satellitenschnecken in gleicher Weise am Umfang eingefasst, wie dies innerhalb der Extruderbohrung des Extruders der Fall ist.

Eine weitere bevorzugte Ausführungsform der Filtriervorrichtung sieht vor, dass die Einlauf-Schmelzetasche in einer lösbar mit dem Einlaufblock verbundenen Kanalbuchse und/oder dass die Auslauf-Schmelzetasche in einer lösbar mit dem Auslaufblock verbundenen Kanalbuchse ausgebildet ist. Hierdurch kann zur Reinigung die jeweilige Kanalbuchse schnell ausgetauscht und außerhalb des Gehäuses der Filtriervorrichtung gereinigt werden.

Dies ist ein besonderer Vorteil, weil der Trichterabschnitt sich von einer im Querschnitt kleineren Einlauföffnung zum Siebrad hin erweitert, so dass ein Hinterschnitt entsteht und die Reinigung des Trichterbereichs nur beschwerlich durch die Einlauföffnung hindurch oder nach kompletter Demontage der Filtriervorrichtung möglich wäre. Nimmt man die Kanalbuchse heraus, kann man diese bequem an der Innenseite reinigen. Außerdem wird der Zugang zur Siebscheibe bei der Reinigung erleichtert, wenn die Kanalbuchse herausgenommen ist.

Zudem können durch die austauschbaren Kanalbuchsen der Filtriervorrichtung leicht Anpassungen der Schmelzetaschen an unterschiedliche Schneckengeometrien bei Verwendung desselben Gehäuses realisiert werden.

Um jegliche Viskositätserhöhung der Kunststoffschmelze aufgrund einer Abkühlung innerhalb der Filtriervorrichtung zu vermeiden, ist vorzugsweise vorgesehen, dass der Einlaufblock und/oder der Auslaufblock mit Fließkanälen für eine Flüssigkeitstemperierung durchzogen sind. Eine Beheizung wird vorzugsweise für einen Anfahrprozess oder während einer Stillstandszeit der Extrusionsvorrichtung vorgenommen.

Durch die Flüssigkeitstemperierung ist nicht nur das Aufheizen auf die Betriebstemperatur realisierbar, sondern insbesondere auch eine Kühlung. Dadurch kann die Wärme abgeführt werden, die durch die Reibungskräfte innerhalb der fließenden Schmelze entsteht. Hierbei sind insbesondere der Bereich der Schneckenspitze im Einlauf - durch die Bewegung der verlängerten Schnecken eingebrachte Scherenergie - und der Durchtritt durch das Filterelement selbst - hohe Scherung innerhalb der kleinen Durchtrittsöffnungen im Siebelement - von Bedeutung. Damit kann z.B. das Filtersystem in einen bestehenden bereits thermisch optimierten Verarbeitungsprozess ohne Filtration integriert werden, ohne dass grundsätzliche Veränderungen in den vor- und nachgelagerten Komponenten durchgeführt werden müssen. Die zusätzlich eingetragene durch das Filterelement und ggf. eine Schneckenverlängerung eingetragenen Wärmemenge kann durch die Flüssigtemperierung abgeführt werden.

Ausbaubare Kanalbuchsen ermöglichen außerdem eine flexible Anpassung an unterschiedliche Extruder, aber auch an Nachfolgewerkzeuge, z.B. ovale Kanäle auf der Auslaufseite für nachfolgende Breitschlitzwerkzeuge oder eine sonstige, an die Profilform angepasste Geometrie für Profilwerkzeuge.

Weiterhin sieht eine bevorzugte Ausführungsform vor, dass das Gehäuse an seiner Oberseite wenigstens einen Öffnungsbereich hat, in welchem das Siebrad aus dem Einlaufblock und dem Auslaufblock herausragt und in welchem wenigstens eine Siebstelle am Siebrad von außerhalb des Gehäuses zugänglich ist.

Ein Doppelschneckenextruder, der insbesondere für die PVC-Verarbeitung geeignet ist, sieht üblicherweise ein Extrudergehäuse mit einer Extruderbohrung vor, in der zwei achsparallele, drehangetriebene Extruderschnecken angeordnet sind, wobei sich die Extruderschnecken bis an eine Trichterzone am Ende der Extruderbohrung erstrecken, welche mit einer Extruderauslassöffnung in Fließverbindung steht.

Erfindungsgemäß kann vorgesehen sein, die Filtriervorrichtung funktionell direkt in den Doppelschneckenextruder zu integrieren. Dazu ist weiterhin vorgesehen, dass ein rotierbares Siebrad, das eine Vielzahl von Sieböffnungen aufweist, in denen jeweils wenigstens ein mit Kunststoffschmelze durchströmbares Siebelement einsetzbar ist, durch die Trichterzone im vorderen Bereich der Extruderbohrung geführt ist und diese in zwei Trichterzonenabschnitte unterteilt.

Eine solche Lösung wird durch einen Doppelschneckenextruder mit den Merkmalen des Anspruchs 8 bereitgestellt. Neben einer voll integrierten Variante eines Extruders mit eingebautem Siebrad ist es nämlich auch möglich, einen üblichen Doppelschneckenextruder mit einer nur geringen Anpassung an der Front mit einer erfindungsgemäßen Filtriervorrichtung zu verbinden. In diesem Fall ist das Siebrad ein Teil der zuvor beschriebenen Filtriervorrichtung, die mit dem Doppelschneckenextruder fest verbunden wird, wobei die Einlauf-Schmelzetasche in dem Gehäuse der Filtriervorrichtung einen Endabschnitt der Extruderbohrung bildet.

Vorgesehen sein kann zudem, zwei Spitzenverlängerungselemente für die Extruderschnecken vorzusehen, die vorn an den eigentlichen Extruderschnecken angebracht werden, aber keine Schneckenstege mehr aufweisen. Die Spitzenverlängerungselemente werden dann anstelle der eigentlichen Extruderschneckenspitzen bis in die Doppel-Extruderschneckenaufnahme eingeschoben. Der Vorteil besteht darin, dass bei einem bereits vorhandenen Doppelschneckenextruder nicht das Extrudergehäuse gekürzt werden muss und auch nicht zusätzlich längere Schnecken beschafft werden müssen, damit die Schnecken vorn ein Stück mit ihrem Spitzenbereich aus der Extruderbohrung herausragen und in die Doppel-Extruderschneckenaufnahme der Filtriervorrichtung eingreifen können.

Das Siebrad kann über einen Freilauf oder einen Klinkenantrieb angetrieben werden, wobei ein Antriebshebel in Aussparungen am äußeren Siebscheibenrand eingreift.

Die Erfindung wird nachfolgend mit Bezug auf das in den Zeichnungen dargestellte Ausführungsbeispiel einer Filtriervorrichtung näher erläutert. Die Figuren zeigen im Einzelnen:
- Figur 1: eine perspektivische Ansicht einer Filtriervorrichtung
- Figur 2: eine perspektivische Ansicht auf die Filtriervorrichtung mit Teilen eines Doppelschneckenextruders;
- Figur 3: die Rückseite der Filtriervorrichtung von schräg oben;
- Figur 4: eine Kanalbuchse in perspektivischer Ansicht;
- Figur 5: einen Einlaufblock in perspektivischer Ansicht,
- Figur 6: einen horizontalen Schnitt durch die Filtriervorrichtung; und
- Figur 7: eine Draufsicht auf die Schnittebene aus Figur 6.
- Figur 8: eine perspektivische Schnittdarstellung einer vertikalen Schnittebene durch die Filtriervorrichtung;
- Figur 9A: die Größenverteilung zwischen einer Doppel-Extruderschneckenaufnahme und einem zylindrischen Trichterabschnitt nach dem Stand der Technik;
- Figur 9B: die Größenverteilung zwischen der Doppel-Extruderschneckenaufnahme und dem Trichterabschnitt der Erfindung.

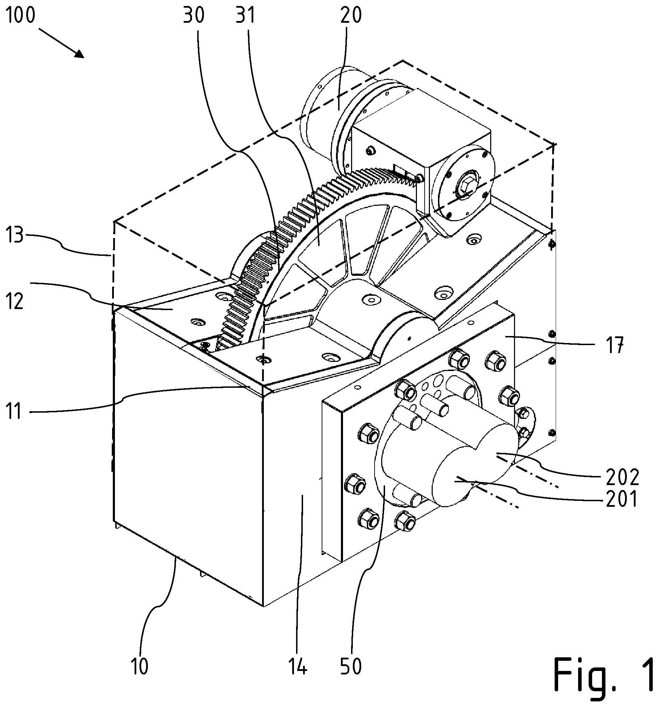

Figur 1 zeigt eine perspektivische Ansicht einer Filtriervorrichtung 100 mit einem Gehäuse 10, das im Wesentlichen durch einen Einlaufblock 11 und einen Auslaufblock 12 sowie ein dazwischen angeordnetes, drehbar gelagertes Siebrad 30 gebildet ist. Das Siebrad 30 wird über einen Antrieb 20 drehangetrieben.

Das Gehäuse 10 ist nur im unteren Bereich an seiner Außenseite quaderförmig ausgebildet. Wie durch die gestrichelten Linien angedeutet, setzt es sich nach oben hin nicht so weit fort, dass das Siebrad 30 vollständig eingeschlossen wäre. Vielmehr wird ein durch die gestrichelten Linien dargestellter Öffnungsbereich 13 gebildet, in welchem im dargestellten Ausführungsbeispiel vier Siebstellen 31 am Siebrad 30 gleichzeitig zu Wartungszwecken frei zugänglich sind. Da im Gehäuse eine Doppel-Extruderschneckenaufnahme für die Schneckenspitzen von zwei Extruderschnecken 201, 202 vorgesehen ist und diese seitlich nebeneinander angeordnet sein müssen, ist es vorteilhaft, den Öffnungsbereich 13 oben am Gehäuse 10 vorzusehen, da so die Gehäuseabmaße insgesamt kleiner ausfallen können.

Eine Besonderheit der erfindungsgemäßen Filtriervorrichtung 100 ist beim Blick auf eine in Figur 1 erkennbare Rückseite 14 des Gehäuses 10 zu sehen. Zwei Extruderschnecken 201, 202 eines Doppelschneckenextruders sind bis in eine Einlaufschmelzetasche im Einlaufblock 11 geführt. Damit bildet die Einlaufschmelzetasche der Filtriervorrichtung 100 einen Teil der Extruderbohrung des Doppelschneckenextruders, der über einen Flansch 17 mit dem Gehäuse 10 der Filtriervorrichtung 100 verbunden werden kann.

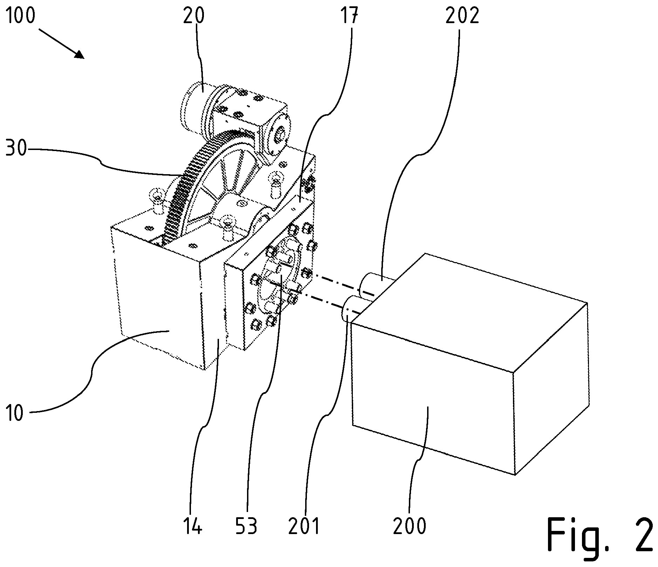

Figur 2 ist eine perspektivische Ansicht auf die Filtriervorrichtung 100 mit einem vorderen Teil eines davor positionierten Doppelschneckenextruders 200, der noch nicht mit dem Flansch 17 am Gehäuse 10 der Filtriervorrichtung 100 verbunden ist. In der zentralen Ausnehmung im Flansch 17 ist eine Doppel-Extruderschneckenaufnahme 53 erkennbar.

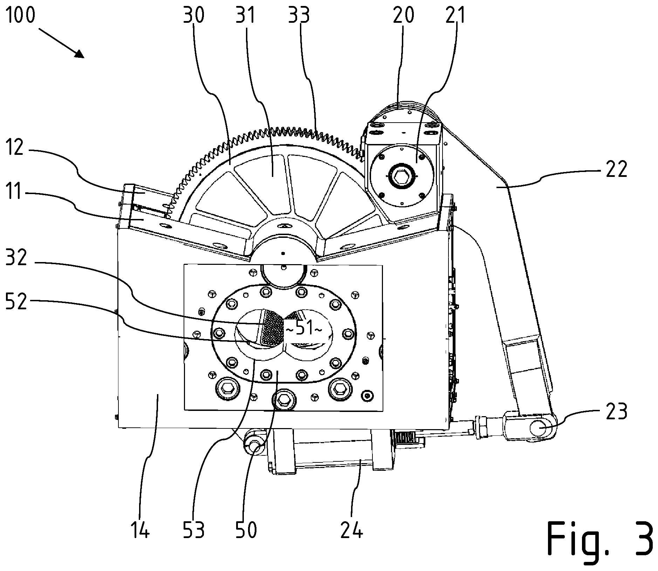

In Figur 3 ist die Filtriervorrichtung 100 perspektivisch von der Rückseite 14 her und ohne den Flansch 17 abgebildet. Deutlich sichtbar ist, dass hier ein stark erweiterter Auslaufkanal vorliegt, der als Einlaufschmelzetasche 51 bezeichnet ist. Die Innenkontur der Einlaufschmelzetasche 51, die innerhalb einer herausnehmbaren Kanalbuchse 50 ausgebildet ist, ist an die beiden ineinander kämmenden Extruderschnecken angepasst und besitzt daher in dem zur Gehäuseaußenseite hinweisenden Bereich zunächst die Form einer liegenden Acht. Dieser Bereich bildet die Doppel-Extruderschneckenaufnahme 53, der an die äußere Kontur des Paars von Extruderschnecken angepasst sein muss. Dahinter schließt sich ein Trichterabschnitt 52 an, der bis an die Siebelemente 32 im Siebrad 30 führt.

Der Antrieb 20 setzt sich zusammen aus einem Hydraulikzylinder 24, dessen Kolbenstange über ein Gelenk 23 mit einem Antriebshebel 22 verbunden ist. Der Antriebshebel 22 ist an einer Achse 21 am Gehäuse, welche einen Freilauf umfasst, gelagert und über den Freilauf mit einem hier nicht dargestellten Ritzel verbunden, welches von außen in eine Verzahnung 33 am Siebrad 30 eingreift.

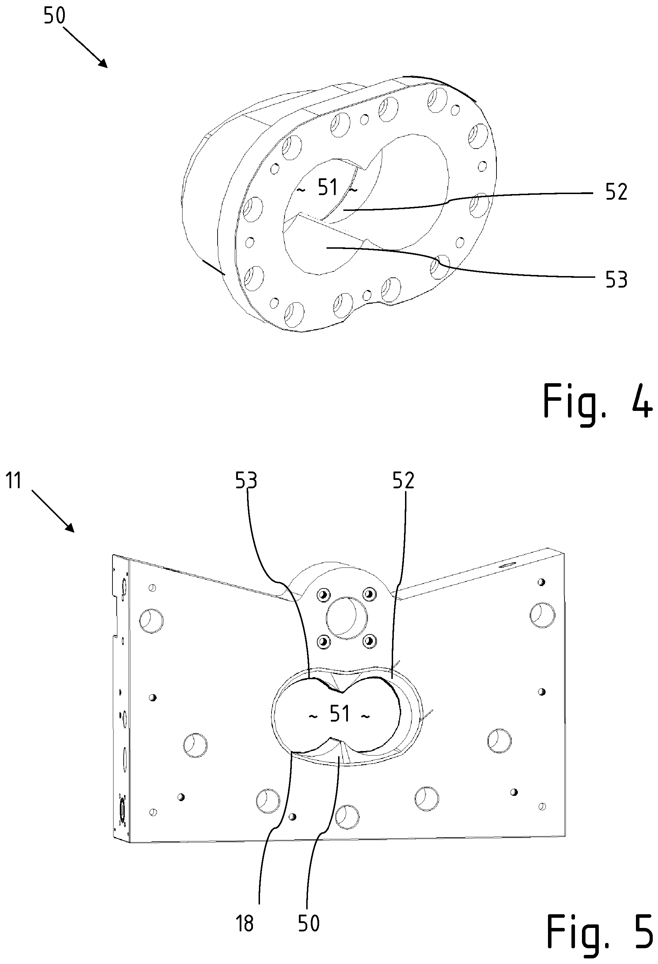

Figur 4 zeigt in perspektivischer Ansicht eine aus dem Einlaufblock 11 herausgenommene Kanalbuchse 50, in welcher die Einlaufschmelzetasche 51 mit ihren beiden Abschnitten 52, 53 ausgebildet ist.

Figur 5 zeigt den Einlaufblock 11 in perspektivischer Ansicht, und zwar mit Blickrichtung von der dem Siebrad zuzuwendenden Innenseite durch die Einlaufschmelzetasche 51 nach außen. Erkennbar ist hier, dass der Einlaufblock 11 eine Öffnung 18 mit nierenförmiger Kontur besitzt, an welche sich die dahinter in den Einlaufblock 11 eingesetzte Kanalbuchse 50 mit ihrer Öffnung in Form einer liegenden Acht nahtlos anschließt.

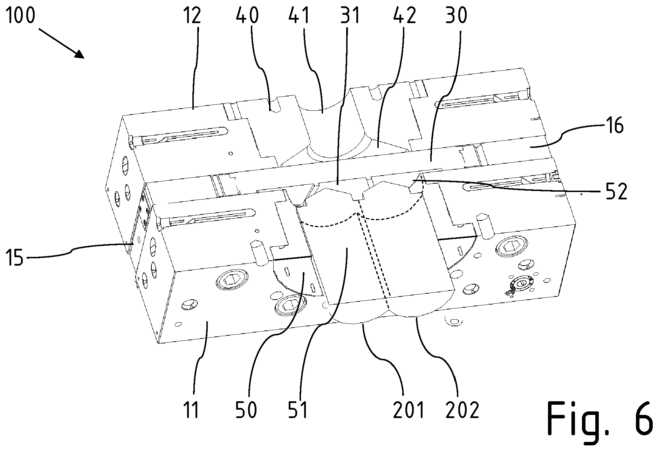

Figur 6 ist ein horizontaler Schnitt durch die Filtriervorrichtung 100, wobei die Schnittebene auf Höhe der Spitzen der Extruderschnecken 201, 202, und damit etwa auf halber Höhe der Kanalbuchse 50 mit der Einlaufschmelzetasche 51 angeordnet ist, welche den Trichterabschnitt 52 enthält.

Auf der Auslaufseite hinter dem Siebrad 30 ist eine weitere Kanalbuchse 40 vorgesehen, die in den Auslaufblock 12 eingesetzt ist und in welcher eine Auslaufschmelzetasche ausgebildet ist. Die Auslaufschmelzetasche umfasst einen vor dem Siebrad 30 gelegenen Trichterabschnitt 42, an den sich ein zylindrischer Auslaufkanal 41 anschließt.

Durch die breite Ausbildung des Trichterabschnitts 52 in der Einlaufschmelzetasche 51 kann die von den beiden Extruderschnecken 201, 202 geförderte Kunststoffschmelze nicht nur gleichzeitig auf mehrere Siebstellen am Siebrad 30 verteilt werden, sondern sie kann gleichmäßig in beiden Dimensionen des Öffnungsquerschnitts expandieren.

Auf der Auslaufseite sorgt der Trichterabschnitt 42 dafür, dass die von den mehreren Siebstellen 31 abfließende Schmelze wieder konzentriert wird und dem Auslaufkanal 41 zugeführt wird.

Im Gehäuse sind zwischen dem Einlaufblock 11 und dem Auslaufblock 12 Distanzelemente 15,16 erkennbar, die zwischen sich das drehbar gelagerte Siebrad 30 einschließen und dazu dienen, eine dichte Verbindung zwischen Einlaufblock 11 und Auslaufblock 12 herzustellen, zugleich aber ein Klemmen des Siebrads 30 zu vermeiden.

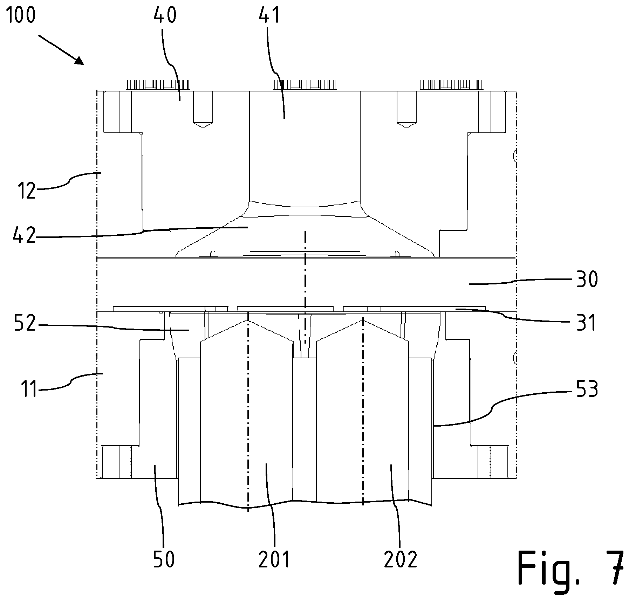

Figur 7 stellt einen Ausschnitt einer Draufsicht auf die Schnittebene aus Figur 6 dar, um noch einmal kenntlich zu machen, wie sich der Trichterabschnitt 52 vor dem Siebrad 30 in Fließrichtung gesehen leicht konvex nach außen erweitert. Die Formgebung dient nicht nur der Verteilung der Kunststoffschmelze auf eine größere Siebfläche am Siebrad 30, sondern ist zusätzlich dahingehend optimiert, dass anhaftende Wandströmungen vermieden werden, da gerade bei der Verarbeitung von PVC länger im Strömungsraum verweilen Kunststoffportionen chemisch zersetzt werden und die Qualität der infiltrierten PVC-Kunststoffschmelze herabsetzen können.

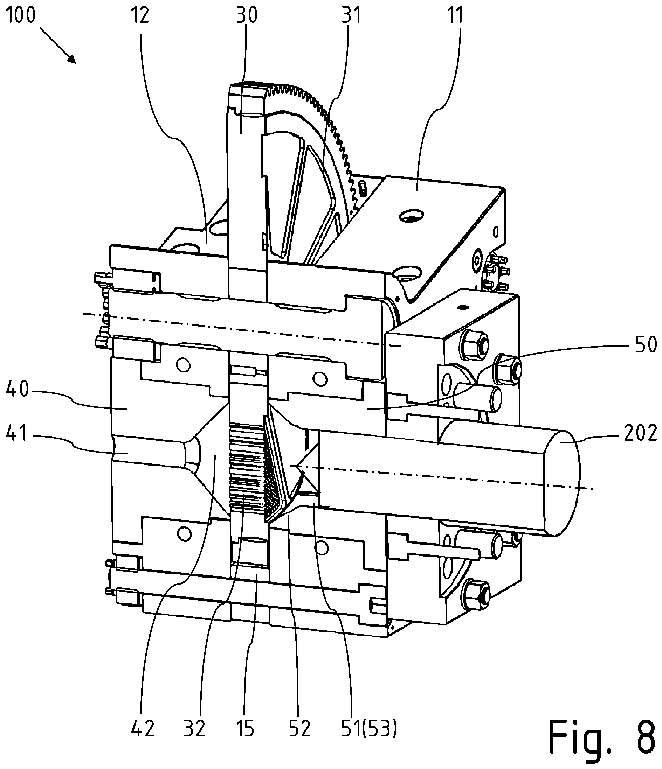

Wie die perspektivische Schnittdarstellung einer vertikalen Schnittebene durch die Filtriervorrichtung in Figur 8 zeigt, ragen die Extruderschnecken 202 nach fertiger Montage des Doppelschneckenextruders an der Filtriervorrichtung 100 bis weit in die Einlaufschmelzetasche 51 hinein. Damit bildet die Einlaufschmelzetasche 51 mit ihrer Doppel-Extruderschneckenaufnahme 53 funktionell den vorderen Teil eines Doppelschneckenextruders, obwohl sie konstruktiv gesehen Teil der Filtriervorrichtung 100 ist.

Die Schneckenspitzen der Extruderschnecken 202 sind bis nahezu unmittelbar vor das Siebrad 30 mit seinen Siebelementen 32 geführt, sodass jenseits der Schneckenspitzen nur eine sehr kurze Fließdistanz zu überbrücken ist, bis die Schmelze durch das Siebelement 32 durchtritt und dann in dem sich verjüngenden Trichterabschnitt 42 wieder komprimiert und durch den Auslaufkanal 41 ausgegeben wird.

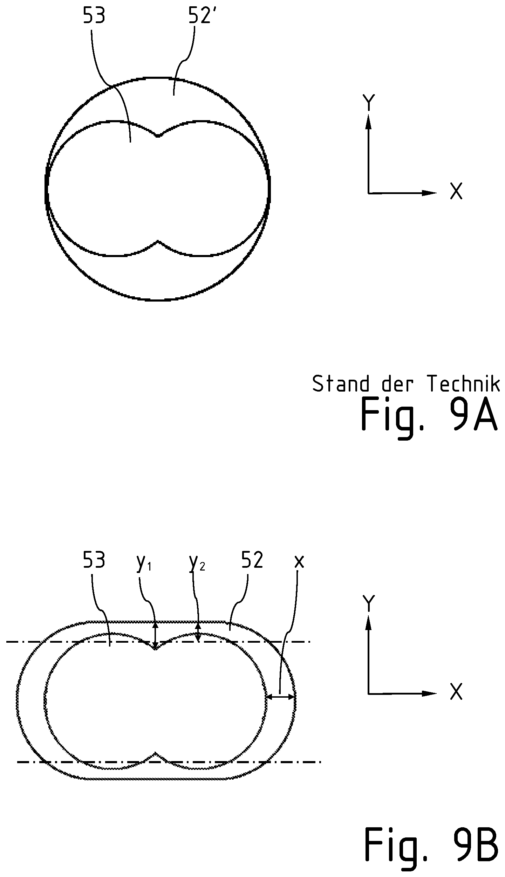

Figur 9A zeigt die Größenverteilung zwischen einer Doppel-Extruderschneckenaufnahme 53 und einem Trichterabschnitt 52', der so ausgebildet ist, dass die Form der liegenden Acht, die durch die nebeneinander liegenden und ineinander kämmenden Doppelschnecken bedingt ist, in einen zylindrischen Fließkanal überführt wird. Dies hat zwei Nachteile: der Durchmesser des Trichterabschnitts 52` ist durch die Breite der "liegenden Acht" bedingt, und legt die notwendige Siebgröße am Siebrad fest. Zum anderen findet in X-Richtung nahezu keine Strömungsänderung statt, in Y-Richtung dagegen schon, so dass die ungleichmäßigen Strömungen im Übergangsbereich Nachteile wie Totzonen und den nachteiligen Einfluss von Scherkräften auf die Schmelze nach sich ziehen können.

In Figur 9B ist in gleicher Größe die Doppel-Extruderschneckenaufnahme 53 mit dem Trichterabschnitt 52 in der Kanalbuchse der Erfindung abgebildet. Die Aufweitung in X-Richtung entspricht annähernd der größten Aufweitung in Y-Richtung, so dass die Strömung aus dem Extruder heraus an die Siebstelle hier sehr viel gleichmäßiger aufgeweitet wird.

Dabei kann die Aufweitung in Y-Richtung einmal so bemessen sein, dass y₁ als größte Ausdehnung in Y-Richtung in der Mitte der Doppel-Extruderschneckenaufnahme 53 angenommen und der Aufweitung x gleichgesetzt wird. Alternativ kann ein Mittelwert y2, der als strichpunktierte Linie dargestellt ist, als Bezug genommen werden.

Im Ergebnis ist die maximale Höhe des Fließkanals, der gemäß Fig. 9B aus dem Trichterabschnitt 52 hervorgeht, bei ähnlichem Querschnitt wie beim Trichterabschnitt 52' in Fig. 9A um 30% niedriger. Dadurch kann zur Erzielung dergleichen Filterwirkung ein Siebrad mit einem kleineren Durchmesser und folglich eine kleinere Filtriervorrichtung gewählt werden.

### Bezugszeichenliste:

- 100: Filtriervorrichtung

- 10: Gehäuse
- 11: Einlaufblock
- 13: Öffnungsbereich
- 14: Rückseite
- 15,16: Distanzelemente
- 17: Flansch
- 18: Öffnung

- 20: Antrieb
- 21: Achse
- 22: Antriebshebel
- 23: Gelenk
- 24: Hydraulikzylinder

- 30: Siebrad
- 31: Siebstellen
- 32: Siebelemente
- 33: Verzahnung

- 40: Kanalbuchse
- 41: Auslaufkanal
- 42: Trichterabschnitt

- 50: Kanalbuchse
- 51: Einlaufschmelzetasche
- 52; 52': Trichterabschnitt
- 53: Doppel-Extruderschneckenaufnahme

- 200: Doppelschneckenextruder
- 201, 202: Extruderschnecken

## Patentansprüche

1. Filtriervorrichtung (100) für PVC-Kunststoffschmelze zur Verbindung mit einem Doppelschneckenextruder, wenigstens umfassend:
- ein Gehäuse (10), das wenigstens aufweist:
- einen Einlaufblock (11) mit wenigstens einem Einlaufkanal,
- einen Auslaufblock (12) mit wenigstens einem Auslaufkanal;
- wenigstens ein zwischen dem Einlaufblock (11) und dem Auslaufblock (12) angeordnetes Distanzelement (15, 16);
- ein Siebrad (30),
- das in dem Gehäuse (10) drehbar gelagert ist,
- das wenigstens teilweise zwischen dem Einlaufblock (11) und dem Auslaufblock (12) angeordnet ist und
- das eine Mehrzahl von Siebstellen (31) aufweist, die jeweils zwischen dem Einlaufkanal und dem Auslaufkanal positionierbar sind und in denen jeweils wenigstens ein mit Kunststoffschmelze durchströmbares Siebelement (32) einsetzbar ist,
- eine Antriebseinrichtung (20) zum Drehen des Siebrads (30) im Gehäuse (10);
**dadurch gekennzeichnet,**
- **dass** der Einlaufkanal wenigstens teilweise in einer Einlauf-Schmelzetasche (51) im Einlaufblock (11) ausgebildet ist, die an einer Einlaufseite an der Außenseite des Gehäuses (10) eine Doppel-Extruderschneckenaufnahme (53) für zwei Schneckenspitzen von zwei nebeneinander anzuordnenden Extruderschnecken (201, 202) aufweist und die sich in einem ovalen oder langlochförmigen Trichterabschnitt (52; 52') erweitert und vor dem Siebrad (30) mündet;
- **dass** der Auslaufkanal wenigstens teilweise in einer Auslauf-Schmelzetasche im Auslaufblock (12) ausgebildet ist, die sich von einem dem Siebrad (30) zugewandten Trichterabschnitt (42) in Fließrichtung verjüngt.

2. Filtriervorrichtung (100) nach Anspruch 1, **dadurch gekennzeichnet, dass** die Doppel-Extruderschneckenaufnahme (53) an der Einlauf-Schmelzetasche (50) durch zwei sich seitlich schneidende, parallel ausgerichtete Zylinderbohrungen gebildet ist, deren Querschnitt die Form einer liegenden Acht besitzt.

3. Filtriervorrichtung (100) nach Anspruch 2, **dadurch gekennzeichnet, dass** der Trichterabschnitt (52; 52') einen umlaufend gleichen Trichterwinkel besitzt.

4. Filtriervorrichtung (100) nach Anspruch 2 oder 3, **dadurch gekennzeichnet, dass** sich im Trichterabschnitt (52; 52') der Querschnitt der Doppel-Extruderschneckenaufnahme (53) in einer durch die Mittelpunkte beider Extruderschnecken (201, 202) führenden X-Richtung im selben Maß erweitert wie in Y-Richtung, bezogen auf ein Maß y1 in der Mitte der Doppel-Extruderschneckenaufnahme (53).

5. Filtriervorrichtung (100) nach Anspruch 2 oder 3, **dadurch gekennzeichnet, dass** sich im Trichterabschnitt (52; 52') der Querschnitt der Doppel-Extruderschneckenaufnahme (53) in einer durch die Mittelpunkte beider Extruderschnecken (201, 202) führenden X-Richtung im selben Maß erweitert wie in Y-Richtung, bezogen auf einen Mittelwert y2 am Ober- und/oder Unterrand der Doppel-Extruderschneckenaufnahme (53).

6. Filtriervorrichtung (100) nach einem der Ansprüche 1 bis 5, **dadurch gekennzeichnet, dass** die Einlauf-Schmelzetasche (51) in einer lösbar mit dem Einlaufblock (11) verbundenen Kanalbuchse (50) ausgebildet ist.

7. Filtriervorrichtung (100) nach einem der Ansprüche 1 bis 6, **dadurch gekennzeichnet, dass** die Auslauf-Schmelzetasche in einer lösbar mit dem Auslaufblock (12) verbundenen Kanalbuchse (40) ausgebildet ist.

8. Filtriervorrichtung (100) nach einem der Ansprüche 1 bis 6, **dadurch gekennzeichnet, dass** der Einlaufblock (11) und/oder der Auslaufblock (12) mit wenigstens einem Fließkanal für eine Flüssigkeitsbeheizung durchzogen sind.

9. Filtriervorrichtung (100) nach einem der Ansprüche 1 bis 8, **dadurch gekennzeichnet, dass** das Gehäuse (10) an seiner Oberseite wenigstens einen Öffnungsbereich (13) hat, in welchem das Siebrad (30) aus dem Gehäuse (10) herausragt und in welchem Öffnungsbereich (13) wenigstens eine Siebstelle (31) am Siebrad (30) von außerhalb des Gehäuses (10) zugänglich ist.

10. Doppelschneckenextruder (200) für die PVC-Verarbeitung,
mit einem Extrudergehäuse mit einer Extruderbohrung, in der zwei achsparallele, drehangetriebene Extruderschnecken (201, 202) angeordnet sind, wobei sich die Extruderschnecken bis in einen Endabschnitt der Extruderbohrung erstrecken, der mit einem Auslaufkanal in Fließverbindung steht,
**dadurch gekennzeichnet, dass** das Extrudergehäuse mit einer Filtriervorrichtung (100) nach wenigstens einem der vorhergehenden Ansprüche verbunden ist, wobei die Einlauf-Schmelzetasche (51) der Filtriervorrichtung (100) den Endabschnitt der Extruderbohrung bildet.

11. Doppelschneckenextruder (200) nach Anspruch 10, **gekennzeichnet durch** zwei Spitzenverlängerungselemente, die vorn an den Extruderschnecken (201, 202) angebracht sind und bis in die Doppel-Extruderschneckenaufnahme (53) reichen.

## Claims

1. Filtering apparatusa (100) for PVC polymer melts for connection to a twin-screw extruder, at least comprising:
- a housing (10) which at least has:
- an inflow block (11) with at least one inflow channel,
- an outflow block (12) with at least one outflow channel;
- at least one spacer element (15, 16) located between the inflow block (11) and the outflow block (12);
- a screen wheel (30),
- which is rotatably mounted in the housing (10),
- which is located at least partly between the inflow block (11) and the outflow block (12) and
- which has a plurality of screening points (31) that can each be positioned between the inflow channel and the outflow channel and into each of which at least one screen element (32) through which polymer melt can flow can be inserted,
- a drive device (20) for rotating the screen wheel (30) in the housing (10);
**characterized**
- **in that** the inflow channel is at least partially formed in an inflow melt pocket (51) in the inflow block (11) and the inflow melt pocket has, on an inflow side on the outer side of the housing (10), a twin extruder screw receptacle (53) for two screw tips of two extruder screws (201, 202) located next to each other, widens in an oval or slot-like funnel portion (52; 52') and emerges in front of the screen wheel (30);
- **in that** the outflow channel is at least partially formed in an outflow melt pocket in the outflow block (12), the outflow melt pocket narrowing in the flow direction from a funnel portion (42) facing towards the screen wheel (30).

2. Filtering apparatus (100) according to Claim 1, **characterized in that** the twin extruder screw receptacle (53) is formed at the inflow melt pocket (50) by two laterally intersecting, parallel-aligned cylindrical bores which have a cross section in the form of a horizontal eight.

3. Filtering apparatus (100) according to Claim 2, **characterized in that** the funnel portion (52; 52') has an identical funnel angle around the circumference.

4. Filtering apparatus (100) according to Claim 2 or 3, **characterized in that**, in the funnel portion (52; 52'), the cross section of the twin extruder screw receptacle (53) widens in an X direction leading through the centre points of the two extruder screws (201, 202) to the same extent as in the Y direction, in relation to a dimension y1 in the centre of the twin extruder screw receptacle (53).

5. Filtering apparatus (100) according to Claim 2 or 3, **characterized in that**, in the funnel portion (52; 52'), the cross section of the twin extruder screw receptacle (53) widens in an X direction leading through the centre points of the two extruder screws (201, 202) to the same extent as in the Y direction, in relation to an average value y2 at the upper and/or lower edge of the twin extruder screw receptacle (53).

6. Filtering apparatus (100) according to one of Claims 1 to 5, **characterized in that** the inflow melt pocket (51) is formed in a channel bushing (50) detachably connected to the inflow block (11).

7. Filtering apparatus (100) according to one of Claims 1 to 6, **characterized in that** the outflow melt pocket is formed in a channel bushing (40) detachably connected to the outflow block (12).

8. Filtering apparatus (100) according to one of Claims 1 to 6, **characterized in that** the inflow block (11) and/or the outflow block (12) have at least one flow channel for a liquid heating means passing through them.

9. Filtering apparatus (100) according to one of Claims 1 to 8, **characterized in that** the upper side of the housing (10) has at least one aperture region (13) in which the screen wheel (30) protrudes out of the housing (10) and in which aperture region (13) at least one screening point (31) on the screen wheel (30) is accessible from outside the housing (10).

10. Twin-screw extruder (200) for PVC processing,
comprising an extruder housing which has an extruder bore containing two axially parallel, rotationally driven extruder screws (201, 202), wherein the extruder screws extend into an end portion of the extruder bore that is in flow connection with an outflow channel,
**characterized in that** the extruder housing is connected to a filtering apparatus (100) according to at least one of the preceding claims, wherein the inflow melt pocket (51) of the filtering apparatus (100) forms the end portion of the extruder bore.

11. Twin-screw extruder (200) according to Claim 10, **characterized by** two tip extension elements attached in front of the extruder screws (201, 202) and going into the twin extruder screw receptacle (53).

## Revendications

1. Dispositif de filtration (100) pour de la masse fondue de matière plastique à base de PVC destiné à être relié à une extrudeuse à double vis sans fin, comprenant au moins :
- un boîtier (10) qui comporte au moins :
- un bloc d'entrée (11) avec au moins un canal d'entrée,
- un bloc de sortie (12) avec au moins un canal de sortie ;
- au moins un élément d'espacement (15, 16) disposé entre le bloc d'entrée (11) et le bloc de sortie (12) ;
- une roue à tamis (30),
- qui est montée de manière rotative dans le boîtier (10),
- qui est disposée au moins en partie entre le bloc d'entrée (11) et le bloc de sortie (12) et
- qui comporte une multitude de points de tamis (31), qui peuvent être positionnés chacun entre le canal d'entrée et le canal de sortie et dans chacun desquels au moins un élément de tamis (32) pouvant être traversé par de la masse fondue de matière plastique peut être inséré,
- un système d'entraînement (20) destiné à faire tourner la roue à tamis (30) dans le boîtier (10) ; **caractérisé en ce**
- **que** le canal d'entrée est réalisé au moins en partie dans une poche de masse fondue d'entrée (51) dans le bloc d'entrée (11), qui comporte, sur un côté d'entrée, sur le côté extérieur du boîtier (10), un logement (53) de deux vis d'extrudeuse pour deux pointes de vis sans fin de deux vis sans fin (201, 202) d'extrudeuse à disposer côte à côte et qui s'élargit dans une section de trémie (52 ; 52') ovale ou allongée et débouche devant la roue à tamis (30) ;
- **que** le canal de sortie est réalisé au moins en partie dans une poche de masse fondue de sortie dans le bloc de sortie (12), qui se rétrécit dans la direction d'écoulement depuis une section de trémie (42) tournée vers la roue à tamis (30).

2. Dispositif de filtration (100) selon la revendication 1, **caractérisé en ce que** le logement (53) de deux vis sans fin d'extrudeuse est formé, sur la poche de masse fondue d'entrée (50), par deux alésages cylindriques orientés parallèlement, se coupant latéralement, dont la section transversale possède la forme d'un huit couché.

3. Dispositif de filtration (100) selon la revendication 2, **caractérisé en ce que** la section de trémie (52 ; 52') possède un angle de trémie identique en périphérie.

4. Dispositif de filtration (100) selon la revendication 2 ou 3, **caractérisé en ce que** la section transversale du logement (53) de deux vis sans fin d'extrudeuse s'élargit, dans la section de trémie (52 ; 52'), dans une direction X menant à travers les points centraux des deux vis sans fin (201, 202) d'extrudeuse dans la même mesure que dans la direction Y, par rapport à une mesure y1 au centre du logement (53) de deux vis sans fin d'extrudeuse.

5. Dispositif de filtration (100) selon la revendication 2 ou 3, **caractérisé en ce que** la section transversale du logement (53) de deux vis sans fin d'extrudeuse s'élargit, dans la section de trémie (52 ; 52'), dans une direction X menant à travers les points centraux des deux vis sans fin (201, 202) d'extrudeuse dans la même mesure que dans la direction Y, par rapport à une valeur moyenne y2 sur le bord supérieur et/ou inférieur du logement (53) de deux vis sans fin d'extrudeuse.

6. Dispositif de filtration (100) selon l'une des revendications 1 à 5, **caractérisé en ce que** la poche de masse fondue d'entrée (51) est réalisée dans une douille de canal (50) reliée de manière amovible au bloc d'entrée (11).

7. Dispositif de filtration (100) selon l'une des revendications 1 à 6, **caractérisé en ce que** la poche de masse fondue de sortie est réalisée dans une douille de canal (40) reliée de manière amovible au bloc de sortie (12).

8. Dispositif de filtration (100) selon l'une des revendications 1 à 6, **caractérisé en ce que** le bloc d'entrée (11) et/ou le bloc de sortie (12) sont parcourus par au moins un canal d'écoulement pour un chauffage de liquide.

9. Dispositif de filtration (100) selon l'une des revendications 1 à 8, **caractérisé en ce que** le boîtier (10) a sur son côté supérieur au moins une zone d'ouverture (13), dans laquelle la roue à tamis (30) dépasse du boîtier (10) et dans laquelle zone d'ouverture (13) au moins un point de tamis (31) sur la roue à tamis (30) est accessible depuis l'extérieur du boîtier (10).

10. Extrudeuse (200) à double vis sans fin pour le traitement de PVC,
avec un boîtier d'extrudeuse avec un alésage d'extrudeuse, dans lequel deux vis sans fin (201, 202) d'extrudeuse entraînées en rotation, parallèles axialement sont disposées, les vis sans fin d'extrudeuse s'étendant jusque dans une section d'extrémité de l'alésage d'extrudeuse, qui est en communication fluidique avec un canal de sortie,
**caractérisée en ce que** le boîtier d'extrudeuse est relié à un dispositif de filtration (100) selon au moins l'une des revendications précédentes, la poche de masse fondue d'entrée (51) du dispositif de filtration (100) formant la section d'extrémité de l'alésage d'extrudeuse.

11. Extrudeuse (200) à double vis sans fin selon la revendication 10, **caractérisée par** deux éléments de prolongement de pointe, qui sont installés à l'avant sur les vis sans fin (201, 202) d'extrudeuse et vont jusque dans le logement (53) de deux vis sans fin d'extrudeuse.
